# DEMANDE DE BREVET EUROPEEN

(11) **EP 2 012 365 A1**
(43) Date de publication de la demande: **07.01.2009**
(21) Numéro de dépôt: 08159313.9
(22) Date de dépôt: 30.06.2008
(51) Int. Cl.: H01L 31/048

(54) **Dispositif d'intégration de panneaux solaires sur un toit, en particulier pour panneaux photovoltaïques**

(30) Priorité: 06.07.2007 FR 0756327
(71) Demandeur: Terreal, 92150 Suresnes (FR)
(72) Inventeur: Blavet, Romain, 56610, ARRADON (FR); Fabre, Christophe, 81660, PONT DE L'ARN (FR); Renon, Olivier, 81100, CASTRES (FR)
(74) Mandataire: Texier, Christian

(57) **Abrégé**

L'invention concerne un dispositif d'intégration d'un ou plusieurs panneaux solaires sur un toit, en particulier pour le solaire photovoltaïque, caractérisé en ce qu'il comprend un châssis (500) pour le ou chaque panneau solaire, le ou chaque châssis comportant un plateau (501) délimité par :
• un premier retour (560), disposé dans la partie supérieure du châssis, orienté au-dessus du plan principal formé par le châssis, et dont la section est en forme de L ;
• un deuxième retour (550), disposé dans la partie inférieure du châssis, orienté au-dessous du plan principal formé par le châssis, et dont la section est en forme de L ;
• un couvrant (530) s'étendant le long de l'un de ses côtés latéraux ; et
• un rebord (540) s'étendant le long de l'autre de ses côtés latéraux ; et
• un raccord supérieur (100) avec la partie supérieure du ou d'un châssis, le raccord supérieur comportant un retour (107), disposé dans la partie inférieure du raccord supérieur, orienté au-dessous du plan principal formé par le raccord supérieur, et dont la section en forme de L coopère avec la partie supérieure du châssis pur former un support au raccord supérieur, ainsi qu'une barrière étanche.

## Description

L'invention concerne un dispositif d'intégration de panneau solaire sur un toit.

L'invention concerne plus précisément un dispositif d'intégration de panneau solaire photovoltaïque sur un toit en tuile à emboîtement, réalisé en kit.

L'invention concerne également un ensemble formé par au moins un panneau solaire et un dispositif selon l'invention.

En particulier, l'invention concerne un tel ensemble comprenant une pluralité de panneaux solaires disposés les uns à côté des autres, horizontalement, verticalement ou les deux à la fois.

L'invention pourra notamment, mais non exclusivement, s'appliquer à un toit comprenant des tuiles d'une gamme de tuiles de la famille « Grands Moules du Sud », et plus particulièrement à une tuile dite Romane Canal ainsi qu'à une gamme de tuiles de la famille « Grands Moules du Nord ».

L'installation de panneaux solaires sur le toit de bâtiments est de plus en plus demandée, en particulier pour du photovoltaïque (production d'électricité).

Toutefois, l'intégration de ceux-ci sur un toit n'est pas toujours réalisée de manière idéale en ce sens où l'installateur doit le plus souvent trouver une solution qui lui est propre par manque de produits adéquats sur le marché.

Il en résulte le plus souvent un temps d'installation long, d'autant plus qu'il est souvent nécessaire d'installer plusieurs dizaines de panneaux solaires sur le toit pour assurer une alimentation électrique convenable. Il s'ensuit des coûts plus importants pour le consommateur final.

Un objectif de l'invention est donc de proposer un dispositif permettant une installation rapide et facile des panneaux solaires.

Par ailleurs, ce manque de produits adéquats sur le marché implique également des risques accrus sur l'étanchéité de l'installation.

Ceci est particulièrement le cas lorsque l'installation doit être faite sur un toit présentant une pente faible. Par pente faible, il faut comprendre une pente comprise entre 10° et 30°. En effet, dans ce cas l'eau s'évacue beaucoup moins bien sous l'effet de la gravité, et l'installateur doit prévoir cette contrainte lors de l'installation.

Pour cette raison, un autre objectif de l'invention est d'assurer une parfaite étanchéité du dispositif.

Par ailleurs, au-delà des questions d'étanchéité, la question se pose de savoir comment intégrer au mieux ces panneaux solaires sur le toit pour que ceux-ci fassent parties intégrantes du toit ; autrement dit pour que leur intégration soit particulièrement esthétique.

On comprend en effet que le consommateur final accepterait difficilement de voir des panneaux solaires en surépaisseur par rapport au toit. Cette exigence est d'autant plus forte qu'elle est le plus souvent imposée par des normes d'urbanisme.

Un autre objectif de l'invention est donc de proposer un dispositif d'intégration de panneau solaire sur un toit, et plus particulièrement pour une application de type solaire photovoltaïque, permettant également d'assurer une meilleure intégration.

Un autre objectif de l'invention est encore de proposer un dispositif particulièrement bien adapté pour l'intégration d'un panneau solaire, en particulier de type solaire photovoltaïque, à un toit réalisé avec une gamme de tuiles de la famille « Grands Moules du Sud », et plus particulièrement à des tuiles de type Romane Canal, ou de la famille « Grands moules du Nord ».

Un autre objectif est de proposer un ensemble formé par au moins un panneau solaire et un dispositif selon l'invention.

Pour atteindre l'un au moins de ces objectifs, il est prévu un dispositif d'intégration d'un ou plusieurs panneaux solaires sur un toit, en particulier pour le solaire photovoltaïque, caractérisé en ce qu'il comprend un châssis pour le ou chaque panneau solaire, le ou chaque châssis comportant un plateau délimité par :
- un premier retour, disposé dans la partie supérieure du châssis, orienté au-dessus du plan principal formé par le châssis, et dont la section est en forme de L ;
- un deuxième retour, disposé dans la partie inférieure du châssis, orienté au-dessous du plan principal formé par le châssis, et dont la section est en forme de L ;
- un couvrant s'étendant le long de l'un de ses côtés latéraux ; et
- un rebord s'étendant le long de l'autre de ses côtés latéraux.

Le dispositif selon l'invention pourra également comprendre l'une au moins des caractéristiques suivantes :
- une pluralité de châssis de panneaux solaires, montés les uns côté des autres ;
- le châssis présente une largeur et une longueur qui sont respectivement un multiple du pureau vertical d'une tuile Romane Canal, et un multiple du pureau horizontal de cette tuile ;
- il comprend un raccord inférieur avec la partie inférieure du ou d'un châssis, le raccord inférieur comportant un retour, disposé dans la partie supérieure du raccord inférieur, orienté au-dessus du plan principal formé par le raccord inférieur, et dont la section en forme de L coopère avec la partie inférieure du châssis pour former un support au châssis, ainsi qu'une barrière étanche ;
- le raccord inférieur comprend un plateau formant le plan principal du raccord, et un repli s'étendant au-dessous du plateau le long de l'arête inférieure de celui-ci, le repli étant destiné à être agrafé avec une bavette, de préférence en Plomb ;
- la bavette, de préférence en Plomb, est agrafée le long de l'une de ses arêtes avec le repli du raccord inférieur ;
- il comprend un raccord supérieur avec la partie supérieure du ou d'un châssis, le raccord supérieur comportant un retour, disposé dans la partie inférieure du raccord supérieur, orienté au-dessous du plan principal formé par le raccord supérieur, et dont la section en forme de L coopère avec la partie supérieure du châssis pour former un support au raccord supérieur, ainsi qu'une barrière étanche ;
- le raccord supérieur comprend un rebord dont la section en forme de L et la hauteur sont adaptées pour qu'une tuile s'y pose sans qu'il y ait de rupture de pente du toit ;
- la forme en L est agencée de sorte que les eaux de pluies ne passent pas entre le raccord supérieur et les tuiles du toit attenantes à ce raccord ;
- il comprend un premier et un deuxième couloirs latéraux présentant un fond plat et des rebords s'étendant perpendiculairement au fond plat, l'un des rebords du premier couloir étant destiné à être recouvert par le couvrant du châssis, et l'un des rebords du deuxième couloir latéral comportant un couvrant pour recouvrir une partie latérale d'un châssis ;
- les rebords des couloirs latéraux sont biseautés au niveau de leurs extrémités supérieures respectives pour faciliter l'emboîtement avec le raccord supérieur correspondant ;
- le raccord supérieur présente au niveau d'au moins l'une de ses extrémités un couloir supplémentaire, pour recouvrir la partie supérieure d'un couloir latéral, et dont la pente correspond à celle du toit ;
- le raccord supérieur comprend des moyens de recouvrement coopérant soit avec un couvrant d'un châssis, soit avec un couvrant d'un couloir latéral ;
- le ou chaque châssis comprend des moyens pour placer et maintenir en position le panneau solaire associé à un châssis ;
- les moyens pour placer et maintenir en position le panneau solaire associé à un châssis comprennent deux pièces comportant chacune :
   - des pattes soudées au niveau des coins supérieurs du châssis,
   - des rebords s'étendant perpendiculairement aux pattes, formant ensemble un U, et sur les arêtes desquels le cadre du panneau solaire est destiné à se positionner, et
   - une languette s'étendant en saillie par rapport aux rebords, languette contre laquelle le cadre est destiné à venir en butée, et comportant au moins un orifice pour faire passer des moyens de fixation sur le cadre ;
- les moyens pour placer et maintenir en position le panneau solaire comprennent deux autres pièces comportant chacune :
   - des pattes soudées au niveau des coins inférieurs du châssis,
   - des rebords s'étendant perpendiculairement par rapport aux pattes, formant ensemble un U, et comportant, au niveau des arêtes des rebords des crochets sur lesquels le cadre du panneau solaire est destiné à s'emboîter.
- les retours du châssis, et des raccords supérieur et inférieur, ainsi que les moyens pour placer et maintenir en position le panneau solaire présentent une hauteur H₁, H₂, H_{M} prédéterminée de sorte que les panneaux se situent dans un même plan, parallèle à la pente du toit ;
- les moyens pour placer et maintenir en position le panneau solaire présentent une hauteur H₁, H₂ prédéterminée minimale de sorte qu'une ventilation et un écoulement des eaux de pluies puissent prendre place sous le ou chaque panneau ;
- le ou chaque châssis, le raccord supérieur, le raccord inférieur et les couloirs latéraux comprennent chacun une équerre ou patte de maintien sur les liteaux du toit, ladite équerre comprenant plusieurs orifices pour faire passer des moyens de fixation sur les liteaux.

D'autres caractéristiques, buts et avantages de la présente invention apparaîtront à la lecture de la description détaillée qui va suivre, et en regard des dessins annexés, donnés à titre d'exemples non limitatifs et sur lesquels :
- les figures 1a et 1b sont respectivement des schémas en perspective d'un panneau solaire monté sur son châssis, du châssis lui-même, et d'une zone agrandie du châssis, le châssis étant destiné à être monté sur des liteaux de la toiture ;
- la figure 2 est un schéma en perspective d'un ensemble formé par un dispositif d'intégration et une pluralité de panneaux solaires ;
- la figure 3 est un schéma en perspective du couloir latéral droit du dispositif d'intégration ;
- la figure 4 est un schéma en perspective du couloir latéral gauche du dispositif d'intégration ;
- les figures 5a, 5b et 5c sont des vues en perspective de trois types de raccords supérieurs du dispositif d'intégration, employés en fonction de leur positionnement de type extrémité droite, milieu ou extrémité gauche sur le dispositif d'intégration ;
- les figures 6a, 6b et 6c sont des vues en perspective de trois types de raccords inférieurs du dispositif d'intégration, employés en fonction de leur positionnement de type extrémité droite, milieu ou extrémité gauche sur le dispositif d'intégration ;
- les figures 7a, 7b et 7c sont des vues de coupe selon la coupe A-A de la figure 2, agrandies, et correspondant respectivement aux partie inférieure, à mi-hauteur et supérieure ;
- la figure 8 est une vue de coupe selon la coupe B-B de la figure 2, agrandie, et correspondant à une partie située à mi-hauteur de l'ensemble ;
- les figures 9a et 9b sont des vues en perspective de pièces servant à la mise en place d'un cadre de panneau solaire sur le châssis dudit panneau ;
- les figures 10a, 10b et 10c sont des vues de coupe selon la coupe C-C de la figure 2, agrandies, et correspondant respectivement aux parties inférieure, à mi-hauteur et supérieure du dispositif d'intégration ;
- les figures 11a, 11b et 11c sont des vues de coupe selon la coupe D-D de la figure 2, agrandies, et correspondant respectivement aux parties inférieure, à mi-hauteur et supérieure du dispositif d'intégration ;
- les figures 12a, 12b et 12c sont des vues de coupe selon la coupe E-E de la figure 2, agrandies, et correspondant respectivement aux parties inférieure, à mi-hauteur et supérieure.

Le dispositif d'intégration 1 de panneau solaire comprend un raccord supérieur 100, un raccord inférieur 200, un couloir latéral gauche 300, un couloir latéral droit 400, et une pluralité de châssis 500 de panneau solaire.

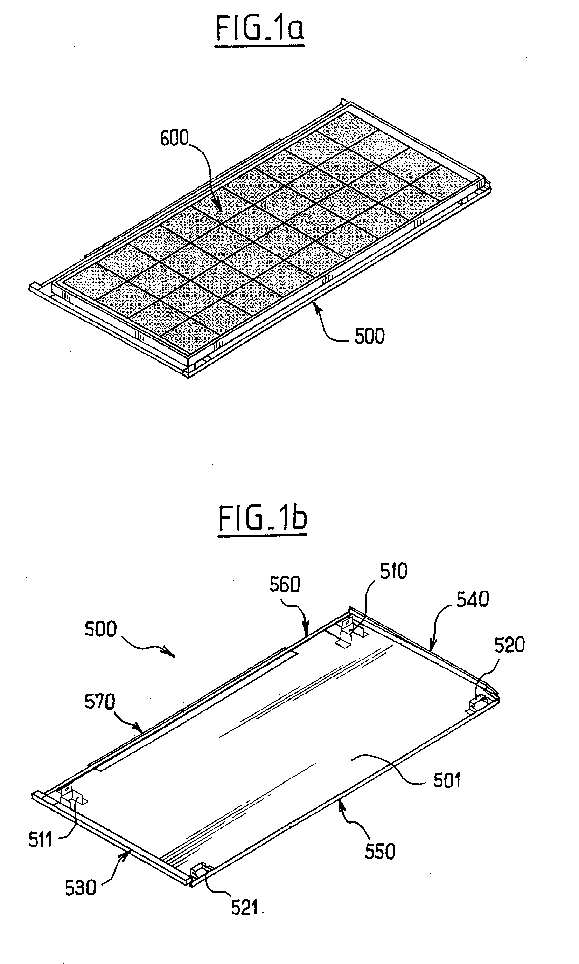

Chaque panneau solaire 600 comprend son propre châssis 500 (figure 1a). Un châssis 500 présente une forme correspondante à celle du panneau solaire, typiquement rectangulaire, des moyens 510, 511, 520, 521 pour placer et maintenir en position le panneau solaire 600 sur le châssis 500, et des moyens 570 pour fixer le châssis sur les liteaux de la toiture (figure 1b).

Les pièces 510, 511, disposés au niveau des coins supérieurs du châssis, permettent de fixer la partie supérieure du cadre 610 d'un panneau solaire 600 sur le châssis.

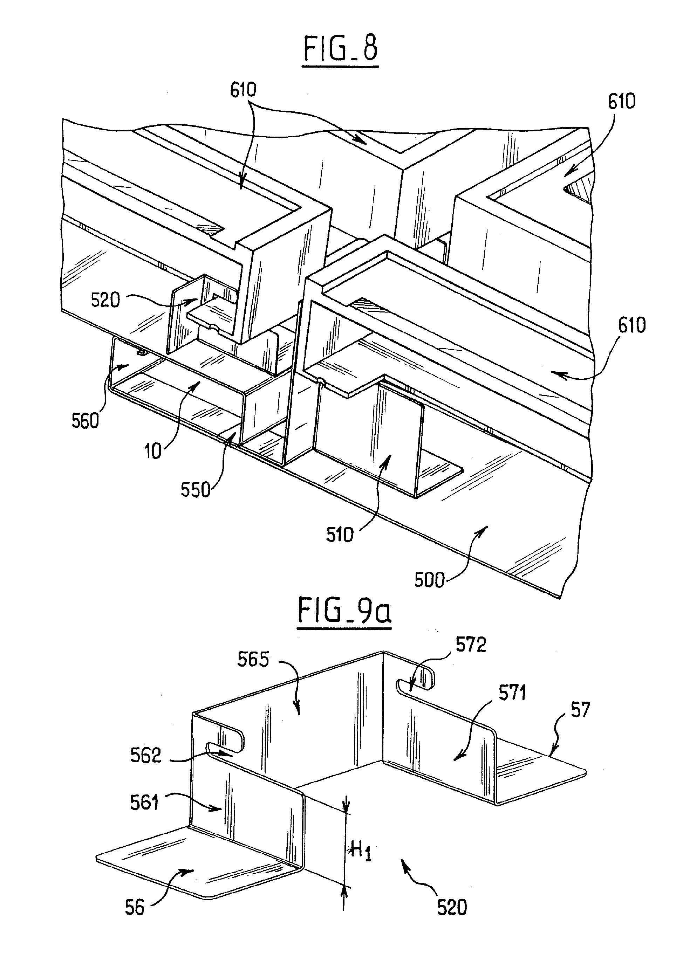

Les moyens 510, 511 comprennent ainsi des pattes 53, 54, 55, fixées, par exemple par soudage, sur le plateau 501 du châssis; ainsi que des rebords 541, 551, 545, formant ensemble un U et s'étendant perpendiculairement par rapport aux pattes (et donc par rapport au plateau du châssis). Ces rebords 541, 554, 545 permettent d'assurer une bonne rigidité aux pièces 510, 511, dont l'arête supérieure sert de support au cadre 610 (figures 8), le cadre venant en effet se positionner sur les rebords 541, 551, 545.

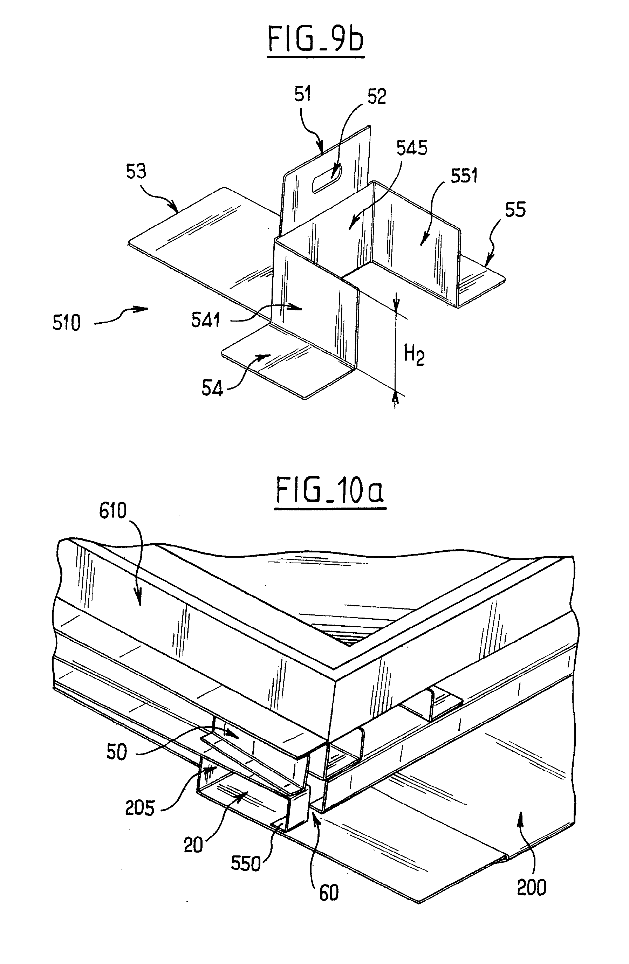

Les moyens 510, 511 comprennent également une languette 51 s'étendant en saillie par rapport aux rebords 541, 551, 545 ; ce cadre 610 venant en appui/butée contre une languette 51 comportant une ouverture 52. L'ouverture 52 est destinée à faire passer des moyens de fixation (non représentés) venant s'ancrer dans le cadre (figure 9b).

Les pièces 520, 521 permettent de fixer la partie inférieure du cadre 610 d'un panneau 600 par emboîtement.

A cet effet, les pièces 520, 521 présentent des rebords 561, 571, 565, formant ensemble un U, et s'étendant perpendiculairement par rapport à des pattes de fixation 56, 57 (de préférence par soudage) montées au niveau des coins inférieurs du plateau 501 du châssis ; les rebords présentant une forme de crochets 562, 572 au niveau de leurs arêtes, crochets destinés à s'emboîter avec le cadre de panneau solaire.

Ainsi, un cadre 610 de panneau solaire 600 est emboîté dans sa partie inférieure (dans les pièces 520, 521) et est retenue par des moyens de fixation dans sa partie supérieure, de sorte qu'un placement et un maintien corrects sont assurés sur le châssis.

Un intérêt de ce mode de fixation est de permettre une pose/dépose rapide et facile d'un panneau solaire sur son châssis. Cela peut advenir lors de l'installation ou encore si un panneau est défaillant. En effet, il suffit de retirer les moyens de fixation en partie haute du cadre (par exemple des vis), puis de déboîter ce cadre 610 pour le désengager des pièces 520, 521.

Les rebords des pièces 520, 521 d'une part et 510, 511 d'autre part présentent respectivement une hauteur H₁ et une hauteur H₂ prédéterminées.

Les hauteurs H₁ et H₂ sont en premier lieu déterminées de sorte que les panneaux solaires 600 disposés l'un au-dessus de l'autre, considérant le sens de la pente du toit, se situent dans un même plan, parallèle à la pente du toit. Pour cela, il faut intégrer la disposition des différents châssis l'un par rapport à l'autre, car il existe une marche ou ressaut de hauteur H_{M} entre le châssis supérieur d'un panneau et le châssis situé immédiatement au-dessous, considérant le sens de la pente (figure 8, 9a et 9b). On observe donc la relation H₁ + H_{M} = H₂ (1).

La hauteur H₂ (ou H₁, H_{M}) est également déterminée de sorte que l'ensemble châssis et panneau ne dépasse pas, ou ne dépasse que faiblement, la hauteur des tuiles attenantes à l'ensemble formé par les panneaux solaires et son dispositif d'intégration.

Ce choix des hauteurs H₁ et H₂ est donc notamment effectué dans un souci esthétique d'intégration des panneaux solaires.

Par ailleurs, la surélévation du panneau solaire 600 par rapport au châssis 500, du fait des hauteurs respectives des moyens de maintien et de positionnement 510, 511, 520, 521 du panneau, permet de laisser un espace vide sous chaque panneau solaire 600 de sorte que les eaux de pluies peuvent s'écouler sous les panneaux solaires. Ces eaux de pluies soit recueillies directement, ou proviennent des courants de tuiles situées au-dessus des panneaux solaires.

On notera que les eaux de pluies qui s'écoulent ne subissent pas de déviation, ce qui est particulièrement bien adapté pour les toits à faibles pentes.

Le plateau 501 d'un châssis 500 assure donc les fonctions d'une tuile : assurer l'étanchéité et conduire les eaux de pluies vers le bas de la toiture (gouttières).

Par ailleurs, cette surélévation assure une bonne ventilation sous les panneaux solaires 600.

Pour assurer une bonne ventilation et un écoulement efficace des eaux de pluies, les hauteurs H1, H2 sont donc également déterminées avec une valeur minimale afin d'assurer correctement ces fonctions.

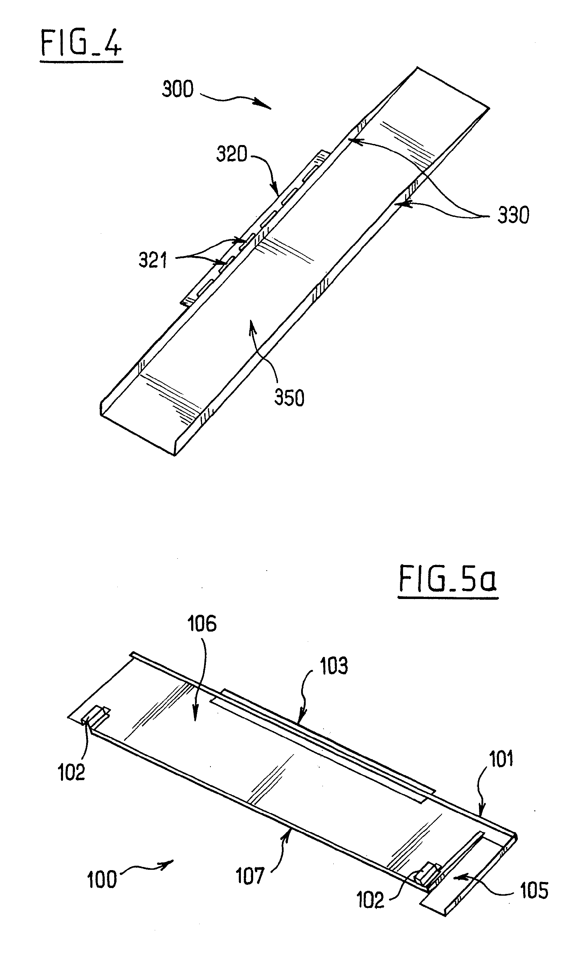

Les moyens pour fixer un châssis 500 sur la toiture sont formés par une équerre ou patte de maintien 570, s'étendant sur une partie de la longueur du châssis. Cette équerre 570 vient se coincer derrière un ou plusieurs liteaux de la toiture, de sorte que ce ou ces liteau(x) forment des moyens de retenue du châssis 500. Pour assurer une bonne fixation, ces moyens prévoient des orifices qui permettant de faire passer des moyens de fixation (par exemple, des vis). On pourra se référer à la figure 1b, mais aussi par exemple à la figure 4 qui illustre également, et de manière plus visible, une telle équerre.

L'assemblage des différents châssis 500 entre eux est effectué par des moyens complémentaires, qui rendent l'installation extrêmement facile et rapide.

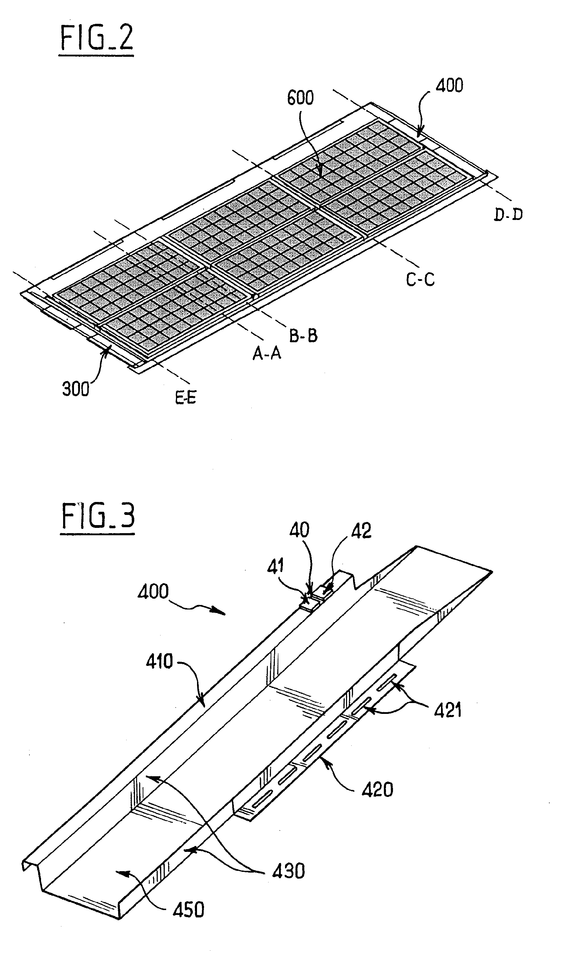

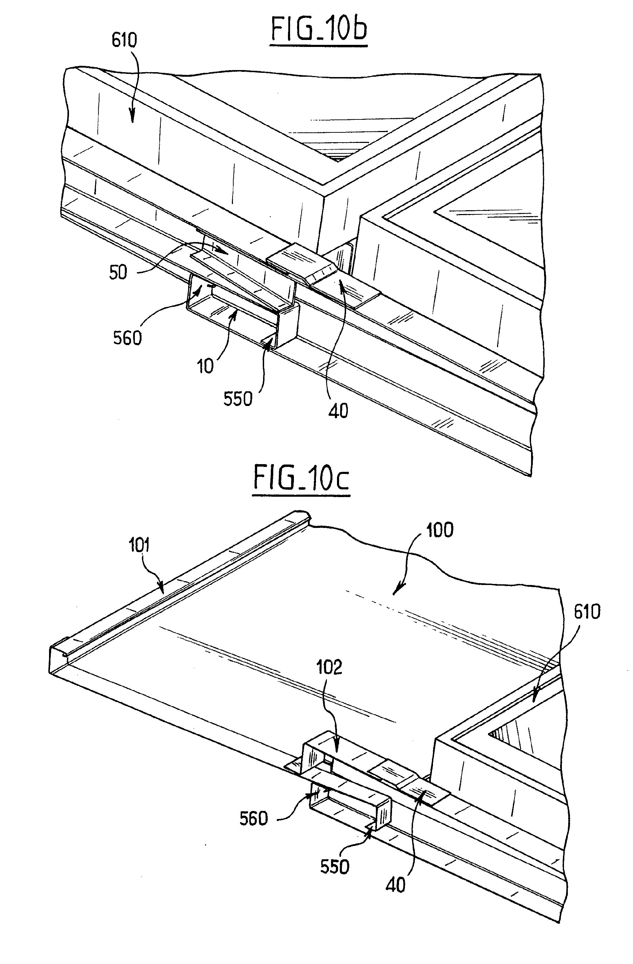

A cet effet, la partie latérale gauche d'un premier châssis est un couvrant 530 présentant une section en forme de U renversé dont la largeur permet de couvrir, par juxtaposition, la partie latérale droite d'un autre châssis 540 de panneau solaire, cet autre châssis étant situé quant à lui, dans un même plan horizontal, sur la gauche du premier châssis (figures 2, 10a, 10b, 10c qui correspondent à la coupe C-C de la figure 2).

A cet effet également, la partie supérieure du châssis situé au-dessous du premier châssis, et ce comme tous les châssis, comprend un retour 560, orienté au-dessus du plan principal formé par ce châssis (plan formé par le plateau 501), dont la section en forme de L est ainsi conformée comme une patte de soutien contre la partie inférieure du premier châssis.

De manière correspondante, la partie inférieure du premier châssis 500 comprend un retour 550 orienté au-dessous du plan principal formé par ce premier châssis, dont la section en forme de L est conformée comme une patte d'appui sur la partie supérieure de l'autre châssis, situé au-dessous du premier châssis.

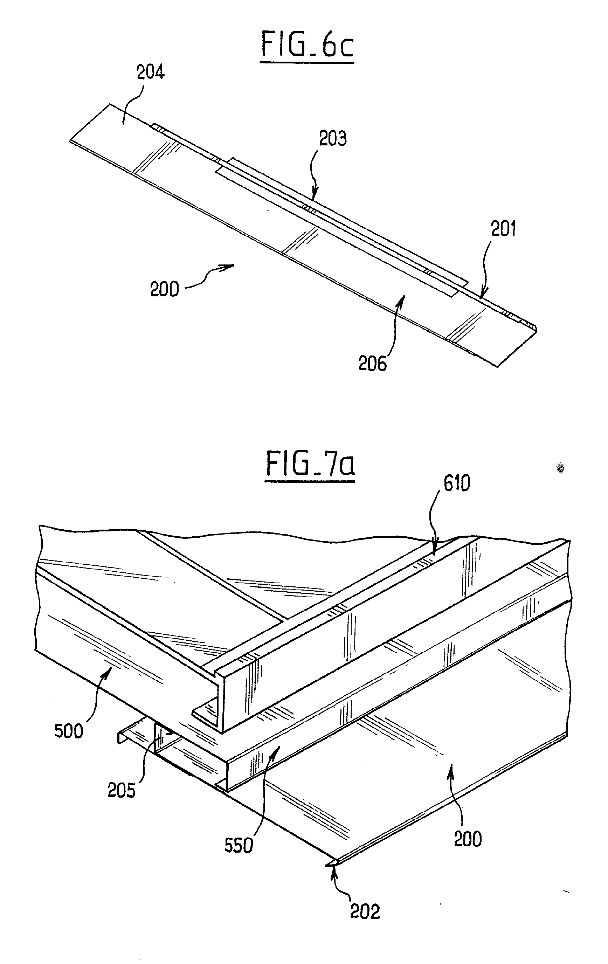

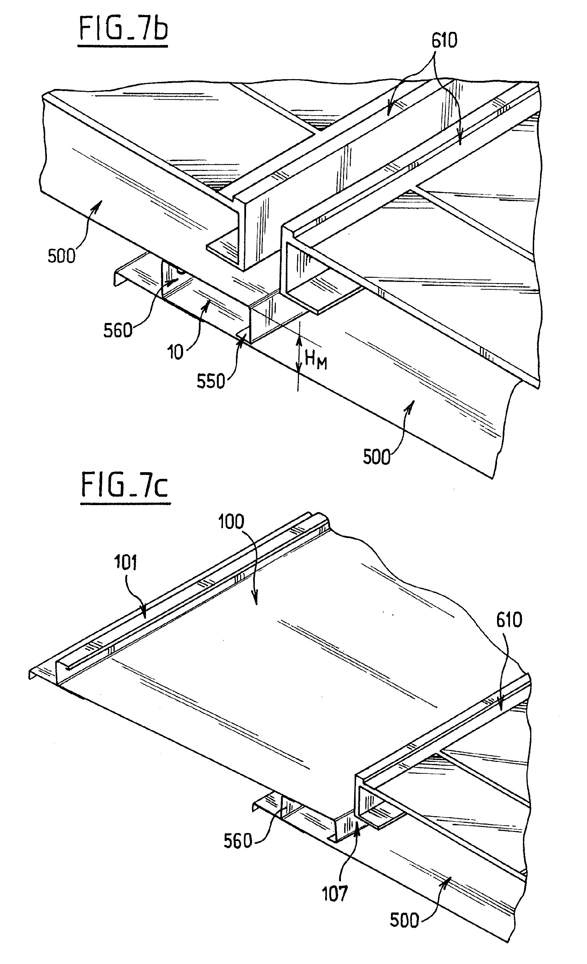

Une fois les châssis montés ensembles, on forme ainsi une cavité 10 de section sensiblement rectangulaire, formant une barrière étanche dont le positionnement est figé une fois que les châssis en question sont fixés sur les liteaux de la toiture (figures 7b, 8, 9b, 10b).

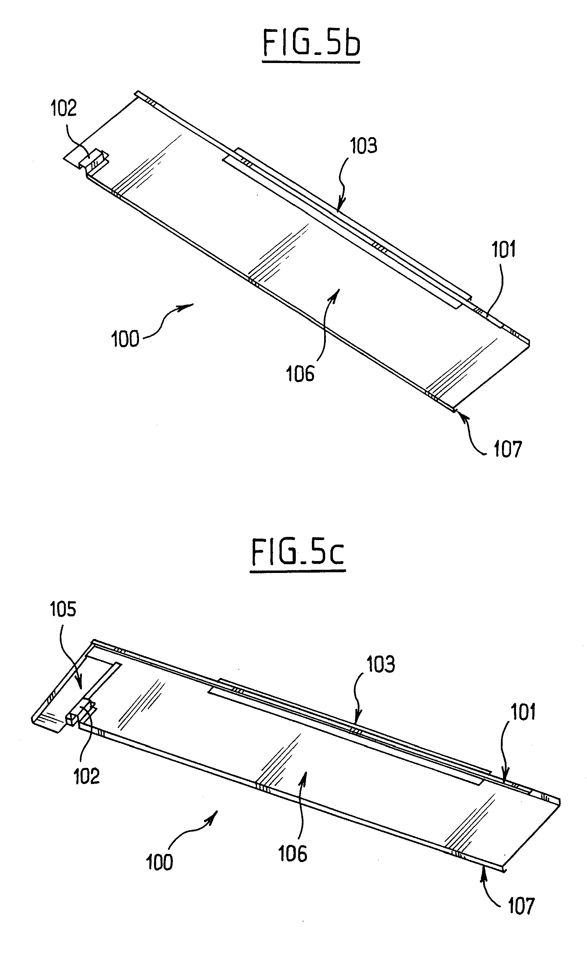

Le dispositif comprend plusieurs types de raccords supérieurs 100, selon qu'ils sont destinés à être mis en place à une extrémité gauche du dispositif (pour coopérer notamment avec le couloir latéral gauche 300), à une extrémité droite du dispositif (pour coopérer notamment avec le couloir latéral droit 400), ou au milieu (à savoir sans coopération avec les couloirs 300, 400 ; mais uniquement avec le châssis 500 attenant) : ils sont présentés seuls aux figures 5a, 5b et 5c.

Le raccord supérieur 100 présente une forme générale rectangulaire, avec un plateau 106 formant le plan principal du raccord.

Il comprend également un rebord arrière 101 dont la section en L et la hauteur sont adaptées pour qu'une tuile s'y pose sans qu'il y ait de rupture de pente. La forme en L du rebord 101, permet également d'éviter à de l'eau de passer entre la tuile et le rebord 101, par exemple sous l'effet d'un coup de vent, ce qui améliore l'étanchéité du dispositif à ce niveau-là.

Ce raccord supérieur 100 comprend des moyens pour permettre sa fixation sur les liteaux de la toiture, à savoir une équerre ou patte de maintien 103 analogue à celle présentée plus haut, s'étendant sur une partie centrale dans le sens de la longueur du raccord supérieur 100.

Il comprend également, dans sa partie inférieure, un retour 107, orienté au-dessous du plan principal formé par le raccord, et dont la section en L et la hauteur sont adaptées pour coopérer avec la partie supérieure du châssis, et notamment avec le retour 550 d'un châssis. La forme en L du retour 107, permet de former un support pour le châssis, ainsi qu'un couloir 30, étanche (figure 7c).

Il comprend aussi des moyens 102 de recouvrement coopérant avec des couvrants, à savoir soit le couvrant 530 d'un châssis (figures 5a, 5b, 5c), soit un couvrant 410 de couloir latéral droit (figure 5a à droite, figure 3).

Enfin, les deux types de raccords supérieurs 100 qui sont destinés à coopérer avec un couloir comprennent à l'une de leurs extrémités, un couloir supplémentaire 105 (figures 5a, 5c), dont la largeur correspond à celle d'un couloir latéral 300, 400 du dispositif d'intégration. Ce couloir supplémentaire 105 est donc la partie du raccord supérieur 100 qui est destinée à coopérer avec ces couloirs 300, 400. Ces couloirs 105 présentent une pente distincte de celle du plateau 106, la pente des couloirs 105 correspondant à celle de la toiture, et des couloirs 300, 400 du dispositif.

Le fait que la pente du plateau 106 soit plus faible que celle de la toiture répond à un souci esthétique de meilleure intégration du panneau solaire. En effet, le panneau solaire 600, et plus précisément le cadre 610, présente une certaine épaisseur. Par ailleurs, ce cadre 610 est monté de façon surélevée par rapport au fond plat (plateau) du châssis 500.

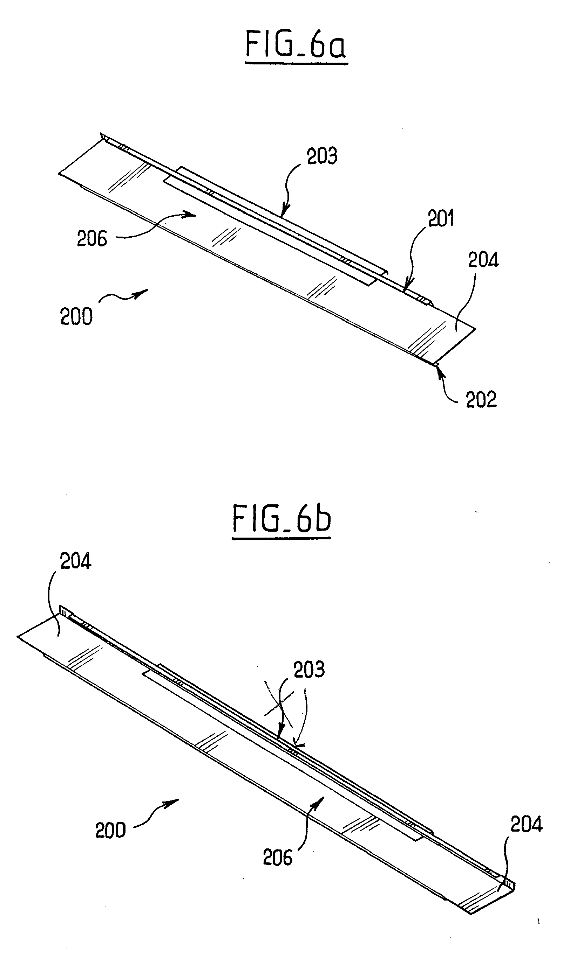

Le dispositif comprend plusieurs types de raccords inférieurs 200, selon qu'ils sont destinés à être mis en place à une extrémité gauche du dispositif (pour coopérer notamment avec le couloir latéral gauche 300), à une extrémité droite du dispositif (pour coopérer notamment avec le couloir latéral droit 400), ou au milieu (à savoir sans coopération avec les couloirs 300, 400 ; mais uniquement avec le châssis 500 attenant) : ils sont présentés seuls aux figures 6a, 6b et 6c.

Le raccord inférieur 200 présente également une forme générale rectangulaire, avec un plateau 206 formant le plan principal du raccord 200.

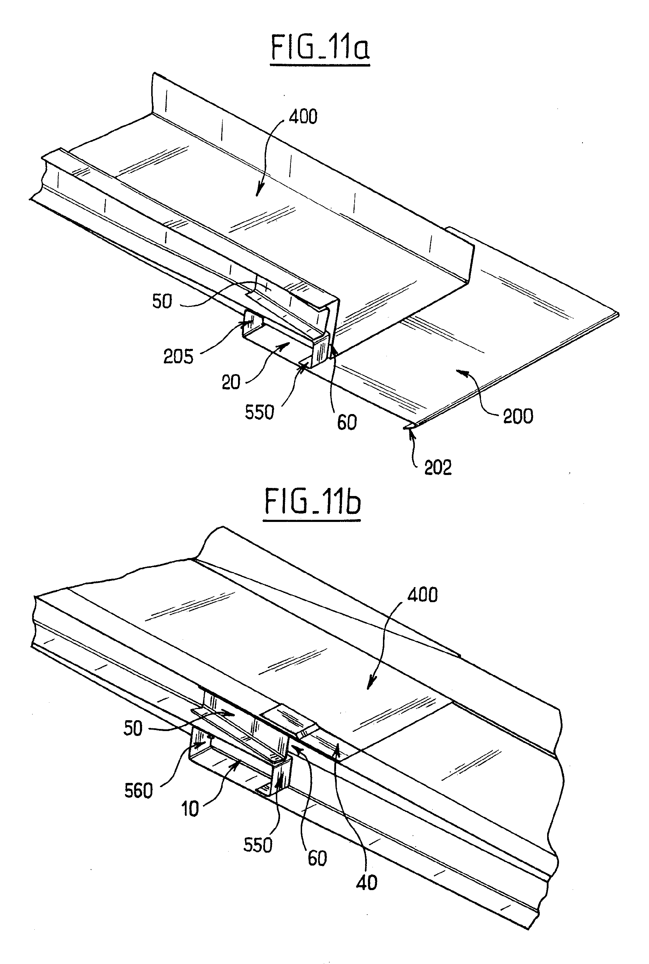

Il comprend également, dans sa partie supérieure, un retour 205 orienté au-dessus du plan principal du raccord inférieur, et dont la forme en L et la hauteur (H_{M}) sont adaptées pour coopérer avec la partie inférieure du châssis, et notamment avec le retour 550 d'un châssis. La forme en L du retour 201, permet de former un support pour le châssis, ainsi qu'un couloir 20 étanche (figures 10a, 11a).

On note que ce retour 205 s'étend sur une partie seulement du raccord inférieur 200, dans le sens de la longueur du raccord inférieur, laissant une zone 204 libre, destinée à permettre la coopération soit avec l'un des couloirs 300, 400 (figures 6a, 6c, 11a), soit avec un autre raccord inférieur 200.

Ce raccord inférieur 100 comprend des moyens pour permettre sa fixation sur les liteaux de la toiture, à savoir une équerre ou patte de maintien 203 analogue à celles présentées plus haut, s'étendant sur une partie centrale dans le sens de la longueur du raccord inférieur 200.

Il comprend aussi un repli 202 s'étendant au-dessous du plateau 206 le long de l'arête inférieure de celui-ci, le repli 202 étant destiné à être agrafé le long de l'arête d'une bavette, de préférence en plomb (non représentée), laquelle vient couvrir la partie supérieure des tuiles de la toiture, qui sont situées immédiatement au-dessous du dispositif d'intégration de panneau solaire.

Le couloir latéral gauche 300 comprend un fond plat 350 de largeur constante, et des rebords 330 s'étendant perpendiculairement au fond plat 350 pour guider les eaux de pluies. Au niveau de son extrémité supérieure, ces rebords 330 sont biseautés pour faciliter l'emboîtement avec le couloir supplémentaire 105 d'un raccord supérieur ou bien avec un autre couloir latéral gauche 300, de même nature, associé à un autre châssis de panneau solaire (figure 4).

Le couloir latéral gauche 300 comprend une équerre ou patte de maintien 320, présentant des orifices 321 pour faire passer des moyens de fixation sur les liteaux de la toiture.

Le couloir latéral droit 400 présente un fond plat 450 de largeur constante, préférentiellement égale à celle d'un couloir latéral gauche 300, et des rebords 430 s'étendant perpendiculairement au fond plat 450 pour guider les eaux de pluies. Au niveau de son extrémité supérieure, ces rebords 430 sont biseautés pour faciliter l'emboîtement avec le couloir supplémentaire 105 d'un raccord supérieur ou bien avec un autre couloir latéral gauche 300, de même nature, associé à un autre châssis de panneau solaire.

Le couloir latéral droit 400 comprend une équerre ou patte de maintien 420, présentant des orifices 421 pour faire passer des moyens de fixation sur les liteaux de la toiture.

Le couloir latéral droit 400 se différencie cependant d'un couloir latéral gauche 300, par la présence sur l'un de ses bords 330 (le bord gauche) d'un couvrant 410 destiné à recouvrir un côté du châssis, et ce afin d'assurer une parfaite étanchéité.

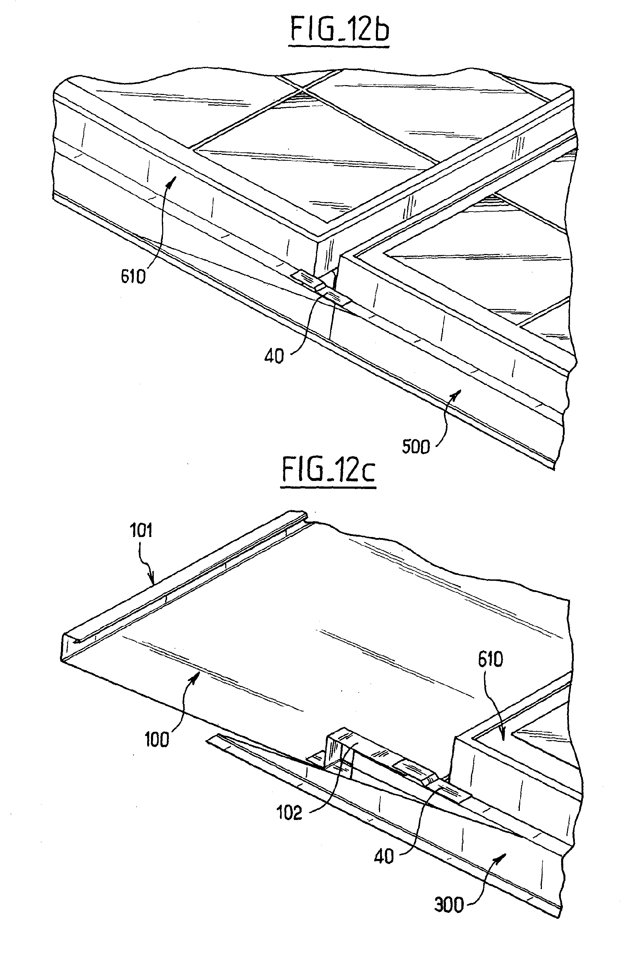

Pour assurer une coopération entre les différents éléments du dispositif d'intégration de panneau solaire, de manière étanche, il est prévu des languettes qui permettent d'éviter des remontées d'eau au niveau de la jonction entre ces différents éléments (figures 3, 10b, 10c, 11b, 11c, 12b, 12c).

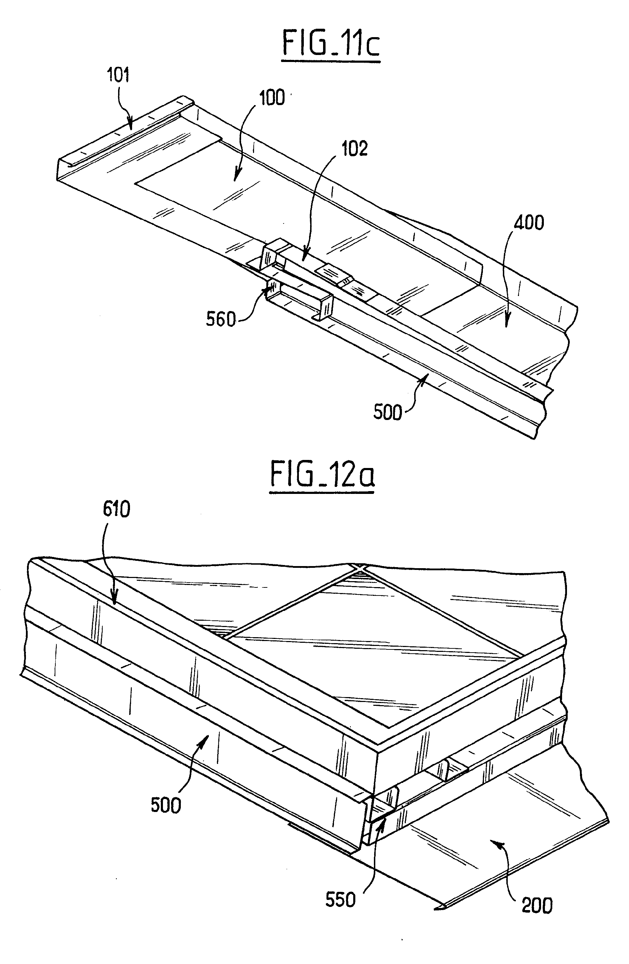

Par exemple, le couloir latéral droit 400 comprend une telle languette 40 en partie supérieure du couvrant 410. Cette languette 40 présente une première partie 41 soudée sur le couvrant 410, et une deuxième partie 42, laissant un jour par rapport au couvrant 410 pour permettre aux moyens 102 d'un raccord supérieur de s'y insérer (figure 11c).

L'installation de tels moyens ou capots 102 au niveau d'une jonction avec un raccord supérieur, bien qu'envisageable, n'apparaît cependant pas nécessaire.

Le dispositif comprend également un certain nombre de déflecteurs 50, qui sont installés au niveau de la jonction entre deux châssis 500 situés l'un derrière l'autre (figures 10b, 11b), si on considère le sens de la pente de la toiture, ou au niveau de la jonction entre la partie inférieure d'un châssis 500 de panneau solaire et d'un raccord inférieur 200 (figures 10a, 11a). Ces déflecteurs 50 sont par ailleurs installés soit au niveau de la jonction entre deux châssis 500 situés l'un à côté de l'autre (figure 10a, 10b), soit au niveau de la jonction entre un châssis 500 de panneau solaire et un couloir latéral gauche (non représenté) ou droit (figure 11a, 11b).

Ces déflecteurs dévient de l'eau susceptible de s'écouler, en éloignant celle-ci des ouvertures 60, de sorte que cette eau n'entre pas dans les couloirs 10, 20 formés par le montage du dispositif. Ils permettent donc de parfaire l'étanchéité du dispositif, et plus particulièrement des couloirs 10, 20.

Pour finaliser l'étanchéité, il peut être prévu de mettre des joints (ex. : butyle, silicone), notamment au niveau des jonctions entre les différentes pièces du dispositif d'intégration de panneau solaire.

Dans la description ci-dessus, nous avons considéré que plusieurs panneaux solaires étaient disposés les uns à côté des autres, au sein du même dispositif d'intégration.

On pourrait cependant envisager qu'il n'y ait qu'un seul panneau solaire, auquel cas un seul type de raccord supérieur (non représenté), ainsi qu'un seul type de raccord inférieur (non représenté) est nécessaire. On comprend ainsi que ces raccords supérieur et inférieur ont chacun des extrémités adaptées pour coopérer avec les couloirs latéraux du dispositif.

Par ailleurs, l'invention ne se limite pas au fait d'avoir un châssis de panneau solaire dont le côté gauche comprend un couvrant. On pourrait en effet prévoir un tel couvrant sur un côté droit du châssis. Bien entendu, dans cette hypothèse, il faudrait prévoir un couloir latéral gauche avec un couvrant, et il ne serait plus nécessaire de prévoir un couloir latéral droit avec ce couvrant.

L'invention présente de nombreux avantages.

La fixation du dispositif sur les liteaux de la toiture est en effet extrêmement simple et rapide. Cette installation est d'autant plus aisée que les différentes pièces du dispositif présentent des dimensions (volume de prise faible) et un poids (inférieur à 35kg) autorisant une très bonne maniabilité. A cet effet, les équerres prévues sur chacune des pièces peuvent servir de poignées lors de l'installation ou lors d'un transport.

La fixation d'un panneau solaire sur son châssis est également très facile sans que son châssis ne bouge.

Le dispositif proposé, est adapté aux faibles pentes, aux tuiles de type « Grands Moules du Sud » ou « Grands Moules du Nord », mais également plus généralement pour tous types de tuiles.

Cependant, le dispositif pourra être particulièrement bien adapté aux tuiles de type Romane Canal de la famille « Grands Moules du Sud », en prévoyant des châssis 500 de panneaux solaires dont la largeur est un multiple du pureau vertical d'une tuile Romane Canal, et dont la longueur est un multiple du pureau horizontal de ce même type de tuiles.

Un tel dimensionnement des panneaux (et donc plus précisément du châssis) permet d'utiliser les liteaux des tuiles : il n'est donc pas nécessaire de refaire ceux-ci aux endroits où le panneau solaire doit être installé.

En outre, on notera que les différentes bordures 530, 540, 550, 560 du châssis 15, servant à coopérer avec d'autres châssis, ou selon le cas avec les couloirs latéraux du dispositif ou les raccords supérieur et inférieur, et le plateau 501 du châssis ont des fonctions analogues à celles de tuiles. En effet, le couvrant 530 peut être associé à un couvrant d'une tuile, le rebord 540 peut être associé à un rebord latéral d'une tuile, les rebords 550, 560 à des recouvrements d'une tuile, et le plateau 501 au courant d'une tuile.

Ainsi, un tel dispositif est facile à mettre en oeuvre par un couvreur, car il est relativement intuitif. En particulier, on peut disposer plusieurs châssis les uns à côté des autres, de manière analogue à la pose de tuiles adjacentes (pose jointive).

## Revendications

1. Dispositif d'intégration d'un ou plusieurs panneaux solaires (600) sur un toit, en particulier pour le solaire photovoltaïque, **caractérisé en ce qu'**il comprend un châssis (500) pour le ou chaque panneau solaire, le ou chaque châssis comportant un plateau (501) délimité par :
• un premier retour (560), disposé dans la partie supérieure du châssis, orienté au-dessus du plan principal formé par le châssis, et dont la section est en forme de L ;
• un deuxième retour (550), disposé dans la partie inférieure du châssis, orienté au-dessous du plan principal formé par le châssis, et dont la section est en forme de L ;
• un couvrant (530) s'étendant le long de l'un de ses côtés latéraux ;
• un rebord (540) s'étendant le long de l'autre de ses côtés latéraux ; et
• un raccord supérieur (100) avec la partie supérieure du ou d'un châssis, le raccord supérieur comportant un retour (107), disposé dans la partie inférieure du raccord supérieur, orienté au-dessous du plan principal formé par le raccord supérieur, et dont la section en forme de L coopère avec la partie supérieure du châssis pour former un support au raccord supérieur, ainsi qu'une barrière étanche.

2. Dispositif selon la revendication précédente, **caractérisé en ce qu'**il comprend une pluralité de châssis (500) de panneaux solaires (600), montés les uns côté des autres.

3. Dispositif selon l'une des revendications précédentes, **caractérisé en ce que** le châssis (500) présente une largeur et une longueur qui sont respectivement un multiple du pureau vertical d'une tuile Romane Canal, et un multiple du pureau horizontal de cette tuile.

4. Dispositif selon l'une des revendications précédentes, **caractérisé en ce qu'**il comprend un raccord inférieur (200) avec la partie inférieure du ou d'un châssis, le raccord inférieur (200) comportant un retour (205), disposé dans la partie supérieure du raccord inférieur, orienté au-dessus du plan principal formé par le raccord inférieur, et dont la section en forme de L coopère avec la partie inférieure du châssis pour former un support au châssis, ainsi qu'une barrière étanche.

5. Dispositif selon la revendication précédente, **caractérisé en ce que** le raccord inférieur (200) comprend un plateau (206) formant le plan principal du raccord, et un repli (202) s'étendant au-dessous du plateau le long de l'arête inférieure de celui-ci, le repli (202) étant destiné à être agrafé avec une bavette, de préférence en Plomb.

6. Dispositif selon la revendication précédente, **caractérisé en ce que** la bavette, de préférence en Plomb, est agrafée le long de l'une de ses arêtes avec le repli (202) du raccord inférieur (200).

7. Dispositif selon la revendication précédente, **caractérisé en ce que** le raccord supérieur (100) comprend un rebord (101) dont la section en forme de L et la hauteur sont adaptées pour qu'une tuile s'y pose sans qu'il y ait de rupture de pente du toit.

8. Dispositif selon la revendication précédente, **caractérisé en ce que** la forme en L est agencée de sorte que les eaux de pluies ne passent pas entre le raccord supérieur (100) et les tuiles du toit attenantes à ce raccord.

9. Dispositif selon l'une des revendications précédentes, **caractérisé en ce qu'**il comprend un premier (300) et un deuxième (400) couloirs latéraux présentant un fond plat (350, 450) et des rebords (330, 430) s'étendant perpendiculairement au fond plat, l'un des rebords du premier couloir (300) étant destiné à être recouvert par le couvrant (530) du châssis, et l'un des rebords du deuxième couloir latéral (400) comportant un couvrant (410) pour recouvrir une partie latérale d'un châssis.

10. Dispositif selon la revendication précédente, **caractérisé en ce que** les rebords (350, 450) des couloirs latéraux (300, 400) sont biseautés au niveau de leurs extrémités supérieures respectives pour faciliter l'emboîtement avec le raccord supérieur (100) correspondant.

11. Dispositif selon l'une des revendications 9 ou 10, **caractérisé en ce que** le raccord supérieur (100) présente au niveau d'au moins l'une de ses extrémités un couloir supplémentaire (105), pour recouvrir la partie supérieure d'un couloir latéral (300, 400), et dont la pente correspond à celle du toit.

12. Dispositif selon l'une des revendications 9 à 11, **caractérisé en ce que** le raccord supérieur (100) comprend des moyens de recouvrement (102) coopérant soit avec un couvrant (530) d'un châssis, soit avec un couvrant (410) d'un couloir latéral (300, 400).

13. Dispositif selon l'une des revendications précédentes, **caractérisé en ce que** le ou chaque châssis (500) comprend des moyens (510, 511, 520, 521) pour placer et maintenir en position le panneau solaire (600) associé à un châssis (500).

14. Dispositif selon la revendication précédente, **caractérisé en ce que** les moyens (510, 511, 520, 521) pour placer et maintenir en position le panneau solaire associé à un châssis (500) comprennent deux pièces (510, 511) comportant chacune :
• des pattes (53, 54, 55) soudées au niveau des coins supérieurs du châssis,
• des rebords (541, 551) s'étendant perpendiculairement aux pattes, formant ensemble un U, et sur les arêtes desquels le cadre (610) du panneau solaire (600) est destiné à se positionner, et
• une languette (51) s'étendant en saillie par rapport aux rebords (541, 551), languette contre laquelle le cadre (610) est destiné à venir en butée, et comportant au moins un orifice (52) pour faire passer des moyens de fixation sur le cadre.

15. Dispositif selon l'une des revendications 13 ou 14, **caractérisé en ce que** les moyens (510, 511, 520, 521) pour placer et maintenir en position le panneau solaire comprennent deux autres pièces (520, 521) comportant chacune :
• des pattes (56, 57) soudées au niveau des coins inférieurs du châssis,
• des rebords (561, 571, 565) s'étendant perpendiculairement par rapport aux pattes, formant ensemble un U, et comportant, au niveau des arêtes des rebords (561, 571) des crochets (562, 572) sur lesquels le cadre (610) du panneau solaire (600) est destiné à s'emboîter.

16. Dispositif selon l'une des revendications 13 à 15, **caractérisé en ce que** les retours (107, 550, 560, 205) du châssis (500), et des raccords supérieur (100) et inférieur (200), ainsi que les moyens (510, 511, 520, 521) pour placer et maintenir en position le panneau solaire présentent une hauteur (H₁, H₂, H_{M}) prédéterminée de sorte que les panneaux se situent dans un même plan, parallèle à la pente du toit.

17. Dispositif selon la revendication précédente, **caractérisé en ce que** les moyens (510, 511, 520, 521) pour placer et maintenir en position le panneau solaire présentent une hauteur (H₁, H₂) prédéterminée minimale de sorte qu'une ventilation et un écoulement des eaux de pluies puissent prendre place sous le ou chaque panneau.

18. Dispositif selon l'une des revendications 9 à 17, **caractérisé en ce que** le ou chaque châssis (500), le raccord supérieur (100), le raccord inférieur (200) et les couloirs latéraux (300, 400) comprennent chacun une équerre ou patte de maintien (103, 203, 320, 420, 570) sur les liteaux du toit, ladite équerre comprenant plusieurs orifices (321, 421) pour faire passer des moyens de fixation sur les liteaux.

19. Ensemble comprenant un dispositif selon l'une des revendications précédentes et au moins un panneau solaire (600), en particulier de type solaire photovoltaïque.

## Revendications modifiées

### Revendications modifiées conformément à la règle 137(2) CBE.

**1.** Dispositif d'intégration d'un ou plusieurs panneaux solaires (600) sur un toit, en particulier pour le solaire photovoltaïque, **caractérisé en ce qu'**il comprend un châssis (500) comprenant une partie supérieur, une partie inférieur de deux côtés latéraux pour le ou chaque panneau solaire, le ou chaque châssis comportant un plateau (501) délimité par :
• un premier retour (560), disposé dans la partie supérieure du châssis, orienté au-dessus du plan principal formé par le châssis, et dont la section est en forme de L ;
• un deuxième retour (550), disposé dans la partie inférieure du châssis, orienté au-dessous du plan principal formé par le châssis, et dont la section est en forme de L ;
• un couvrant (530) s'étendant le long de l'un de ses côtés latéraux ;
• un rebord (540) s'étendant le long de l'autre de ses côtés latéraux ; et
• un raccord supérieur (100) avec la partie supérieur du ou d'un châssis, le raccord supérieur comportant un premier plateau (106) formant le plan principal du raccord, et un retour (107) ayant une section en forme de L, disposé dans la partie inférieure du raccord supérieur, orienté au-dessous du plan principal formé par le raccord supérieur, et dont la section en forme de L coopère avec la partie supérieure du châssis pour former un support au raccord supérieur, ainsi qu'une barrière étanche.

**2.** Dispositif selon la revendication précédente, **caractérisé en ce qu'**il comprend une pluralité de châssis (500) de panneaux solaires (600), montés les uns côté des autres.

**3.** Dispositif selon l'une des revendications précédentes, **caractérisé en ce que** le châssis (500) présente une largeur et une longueur qui sont respectivement un multiple du pureau vertical d'une tuile Romane Canal, et un multiple du pureau horizontal de cette tuile.

**4.** Dispositif selon l'une des revendications précédentes, **caractérisé en ce qu'**il comprend un raccord inférieur (200) avec la partie inférieure du ou d'un châssis, le raccord inférieur (200) comportant un second plateau (206) formant le plan principal du raccord, et un retour (205) ayant une section en forme de L, disposé dans la partie supérieure du raccord inférieur, orienté au-dessus du plan principal formé par le raccord inférieur, et dont la section en forme de L coopère avec la partie inférieure du châssis pour former un support au châssis, ainsi qu'une barrière étanche.

**5.** Dispositif selon la revendication précédente, **caractérisé en ce que** le raccord inférieur (200) comprend un repli (202) s'étendant au-dessous du plateau le long de l'arête inférieure de celui-ci, le repli (202) étant destiné à être agrafé avec une bavette, de préférence en Plomb.

**6.** Dispositif selon la revendication précédente, **caractérisé en ce que** la bavette, de préférence en Plomb, est agrafée le long de l'une de ses arêtes avec le repli (202) du raccord inférieur (200).

**7.** Dispositif selon la revendication précédente, **caractérisé en ce que** le raccord supérieur (100) comprend un rebord (101) dont la section en forme de L et la hauteur sont adaptées pour qu'une tuile s'y pose sans qu'il y ait de rupture de pente du toit.

**8.** Dispositif selon la revendication précédente, **caractérisé en ce que** la forme en L est agencée de sorte que les eaux de pluies ne passent pas entre le raccord supérieur (100) et les tuiles du toit attenantes à ce raccord.

**9.** Dispositif selon l'une des revendications précédentes, **caractérisé en ce qu'**il comprend un premier (300) et un deuxième (400) couloirs latéraux présentant un fond plat (350, 450) et des rebords (330, 430) s'étendant perpendiculairement au fond plat, l'un des rebords du premier couloir (300) étant destiné à être recouvert par le couvrant (530) du châssis, et l'un des rebords du deuxième couloir latéral (400) comportant un couvrant (410) pour recouvrir une partie latérale d'un châssis.

**10.** Dispositif selon la revendication précédente, **caractérisé en ce que** les rebords (350, 450) des couloirs latéraux (300, 400) sont biseautés au niveau de leurs extrémités supérieures respectives pour faciliter l'emboîtement avec le raccord supérieur (100) correspondant.

**11.** Dispositif selon l'une des revendications 9 ou 10, **caractérisé en ce que** le raccord supérieur (100) présente au niveau d'au moins l'une de ses extrémités un couloir supplémentaire (105), pour recouvrir la partie supérieure d'un couloir latéral (300, 400), et dont la pente correspond à celle du toit.

**12.** Dispositif selon l'une des revendications 9 à 11, **caractérisé en ce que** le raccord supérieur (100) comprend des moyens de recouvrement (102) coopérant soit avec un couvrant (530) d'un châssis, soit avec un couvrant (410) d'un couloir latéral (300, 400).

**13.** Dispositif selon l'une des revendications précédentes, **caractérisé en ce que** le ou chaque châssis (500) comprend des moyens (510, 511, 520, 521) pour placer et maintenir en position le panneau solaire (600) associé à un châssis (500).

**14.** Dispositif selon la revendication précédente, **caractérisé en ce que** les moyens (510, 511, 520, 521) pour placer et maintenir en position le panneau solaire associé à un châssis (500) comprennent deux pièces (510, 511) comportant chacune :
• des pattes (53, 54, 55) soudées au niveau des coins supérieurs du châssis,
• des rebords (541, 551) s'étendant perpendiculairement aux pattes, formant ensemble un U, et sur les arêtes desquels le cadre (610) du panneau solaire (600) est destiné à se positionner, et
• une languette (51) s'étendant en saillie par rapport aux rebords (541, 551), languette contre laquelle le cadre (610) est destiné à venir en butée, et comportant au moins un orifice (52) pour faire passer des moyens de fixation sur le cadre.

**15.** Dispositif selon l'une des revendications 13 ou 14, **caractérisé en ce que** les moyens (510, 511, 520, 521) pour placer et maintenir en position le panneau solaire comprennent deux autres pièces (520, 521) comportant chacune :
• des pattes (56, 57) soudées au niveau des coins inférieurs du châssis,
• des rebords (561, 571, 565) s'étendant perpendiculairement par rapport aux pattes, formant ensemble un U, et comportant, au niveau des arêtes des rebords (561, 571) des crochets (562, 572) sur lesquels le cadre (610) du panneau solaire (600) est destiné à s'emboîter.

**16.** Dispositif selon l'une des revendications 13 à 15, **caractérisé en ce que** les retours (107, 550, 560, 205) du châssis (500), et des raccords supérieur (100) et inférieur (200), ainsi que les moyens (510, 511, 520, 521) pour placer et maintenir en position le panneau solaire présentent une hauteur (H₁, H₂, H_{M}) prédéterminée de sorte que les panneaux se situent dans un même plan, parallèle à la pente du toit.

**17.** Dispositif selon la revendication précédente, **caractérisé en ce que** les moyens (510, 511, 520, 521) pour placer et maintenir en position le panneau solaire présentent une hauteur (H₁, H₂) prédéterminée minimale de sorte qu'une ventilation et un écoulement des eaux de pluies puissent prendre place sous le ou chaque panneau.

**18.** Dispositif selon l'une des revendications 9 à 17, **caractérisé en ce que** le ou chaque châssis (500), le raccord supérieur (100), le raccord inférieur (200) et les couloirs latéraux (300, 400) comprennent chacun une équerre ou patte de maintien (103, 203, 320, 420, 570) sur les liteaux du toit, ladite équerre comprenant plusieurs orifices (321, 421) pour faire passer des moyens de fixation sur les liteaux.

**19.** Ensemble comprenant un dispositif selon l'une des revendications précédentes et au moins un panneau solaire (600), en particulier de type solaire photovoltaïque.
